Europäisches Patentamt

European Patent Office

Office européen des brevets

(19)

(11) Publication number: **0 041 831**
**B1**

(12) EUROPEAN PATENT SPECIFICATION

(45) Date of publication of patent specification: **28.12.88**

(51) Int. Cl.⁴: **F 01 N 3/30, F 02 B 27/04**

(21) Application number: **81302475.9**

(22) Date of filing: **04.06.81**

(54) **Device for admitting air to the exhaust manifold of an internal combustion engine.**

(30) Priority: **06.06.80 GB 8018661**

(43) Date of publication of application:
**16.12.81 Bulletin 81/50**

(45) Publication of the grant of the patent:
**28.12.88 Bulletin 88/52**

(84) Designated Contracting States:
**AT BE CH DE FR GB IT LI LU NL SE**

(56) References cited:
**AU-A- 481 902**
**DE-A-2 337 051**
**FR-A-2 108 327**
**GB-A- 639 790**
**GB-A- 655 761**
**US-A-3 253 401**
**US-A-3 390 520**
**US-A-3 455 106**

(73) Proprietor: **Pulse Air Research Limited**
**Block 52, Fereneze Industrial Estate Gateside Road**
**Barrhead G78 1TA (GB)**

(72) Inventor: **Hare, George Frank**
**174 Lynn Road**
**Wisbech Cambs PE13 3EB (GB)**

(74) Representative: **Archer, Philip Bruce et al**
**Urquhart-Dykes & Lord Trinity Court Trinity Street Priestgate**
**Peterborough Cambridgeshire PE1 1DA (GB)**

Courier Press, Leamington Spa, England.

## Description

This invention relates to devices for admitting air to the exhaust manifolds of internal combustion engines. Such devices may, for convenience, be referred to as "exhaust aspirators".

Broadly, the function of an exhaust aspirator is to permit the induction of air into the exhaust manifold from the atmosphere at certain points during the cycle of pressure changes which occur in the exhaust manifold during normal running of the engine.

At normal engine speeds, due in part to overlapping in the times of opening of certain inlet and exhaust valves of an internal combustion engine, it is possible for the exhaust gases which have been discharged from one cylinder of the engine to be drawn into another cylinder, thereby reducing the performance of the engine. A further factor is that vacuum waves occurring in the exhaust system tend to inhibit the discharge therefrom of exhaust gases.

A function of an exhaust aspirator is to permit the induction of relatively clean air into the exhaust manifold so as to damp down such vacuum waves, thereby promoting more effective exhaust gas discharge. Also, the aspirator operates to cause the aspirated air, rather than exhaust gas to be drawn into a combustion chamber of the engine together with the combustion charge, in the manner mentioned above.

In United States patent specification 3,455,106 (Flint) there is disclosed an exhaust aspirator intended to perform the function disclosed above. It is found in practice however, that the exhaust aspirator disclosed in this prior US patent specification, and other similar disclosures, are subject to certain limitations so far as concerns the range of engine speeds at which they provide improved performance, and as regards their effectiveness for reducing the proportion of undesirable constituents in the exhaust gases of an engine. More specifically, it has been found that prior exhaust aspirators do not provide significant improvement of engine performance at engine speeds much about one thousand five hundred revolutions per minute.

An object of the present invention is to provide an improved device for admitting air to the exhaust manifold of an internal combustion engine and/or such a device offering improvements in relation to one or more of the shortcomings of the prior art identified above.

According to the invention there is provided a device for admitting air to the exhaust manifold of an internal combustion engine as defined in the accompanying claims.

In an embodiment described below the diameter of the inner chamber portion is from seventy per cent to ninety per cent of the diameter of the outer chamber portion. The air inlet opening is of circular cross sectional shape, the diameter of the air inlet opening lying in the range of from ten per cent to thirty per cent of the diameter of the outer chamber portion. The depth of the chamber formed in the valve seat member measured from the valve seating lip to the closed end of the valve seat member lies in the range of from forty per cent to sixty per cent of the diameter of the outer chamber portion.

Embodiments of the invention will now be described by way of example with reference to the accompanying drawings in which:

Fig. 1 shows a side elevation view of an exhaust aspirator;

Fig. 2 shows an exploded view, partly in section, of a control valve assembly seen in Fig. 1, including a cross-sectional view of a valve seat member for use in the control valve assembly;

Fig. 3 shows, on a larger scale a section through a portion of a modified control valve assembly;

Fig. 4 shows a perspective view of the closed end of the cup-shaped valve seat member also seen in Fig. 2.

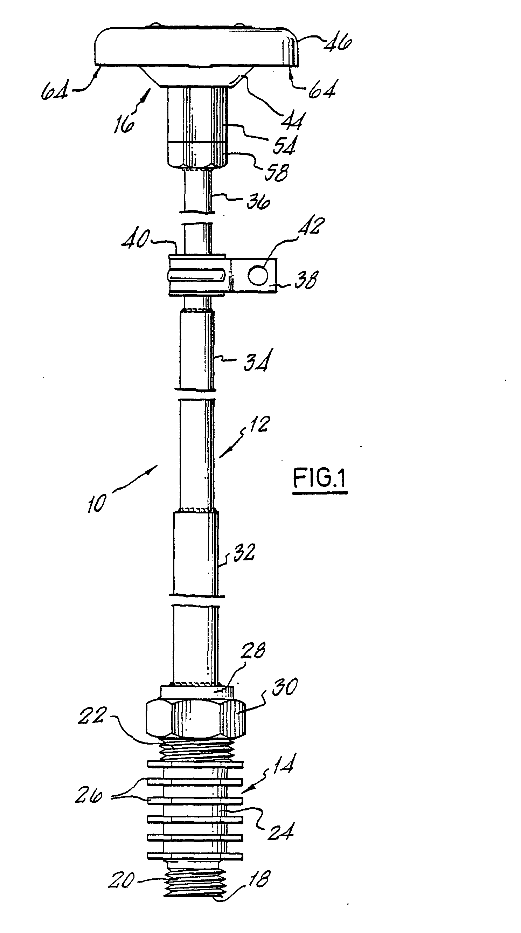

Fig. 1 shows a device 10 for admitting air to the exhaust manifold of an internal combustion engine. Device 10 will be referred to as an exhaust aspirator.

Exhaust aspirator 10 comprises an air admission tube 12, a connector 14 at one end of the tube whereby the tube can be connected to the exhaust manifold (not shown) of an internal combustion engine, and a control valve assembly 16 at the other end of the air admission tube, to control the passage of gas through that tube. It is deemed unnecessary to describe or illustrate the exhaust manifold in detail since such a structure is so well known in the art.

Connector 14 is in the form of a steel tube 18 having screw-threaded end portions 20, 22 between which a central portion 24 carries six integrally-formed cooling fins 26.

Screw-threaded end portion 20 is to be received in an appropriately-drilled and tapped hole formed in the exhaust manifold of an internal combustion engine, such as a petrol engine of a car. The hole to receive end portion 20 is preferably formed in the manifold as close as possible to the cylinder block of the engine. It may be formed in any one of the portions of the manifold connected to individual cylinders of the internal combustion engine.

Air admission tube 12 has a flanged inner end 28 which co-operates with a brass nut 30 to join tube 12 to connector 14.

The exhaust aspirator 10 shown in Fig. 1 is intended for a car having a petrol engine, and air admission tube is of length 45 cm. The tube comprises inner, central and outer portions 32, 34 and 36 respectively, each of which is of constant internal diameter, the internal diameter of portion 36 being larger than that of portion 34, which in turn is larger than that of portion 32.

The three tube portions 32, 34 and 36 are formed of copper suitably brazed or welded together. A stay 38 having an internal rubber grommet 40 is provided to receive through an aperture 42 a bolt (not shown) whereby the stay is secured to an appropriate fixed structure within the engine compartment of the car so as to reduce vibration of air admission tube 12 during use.

Control valve assembly 16 is formed predominantly of aluminium or of a metal alloy so as to have a density less than that of steel whereby vibration of the copper air admission tube 12 is reduced during use.

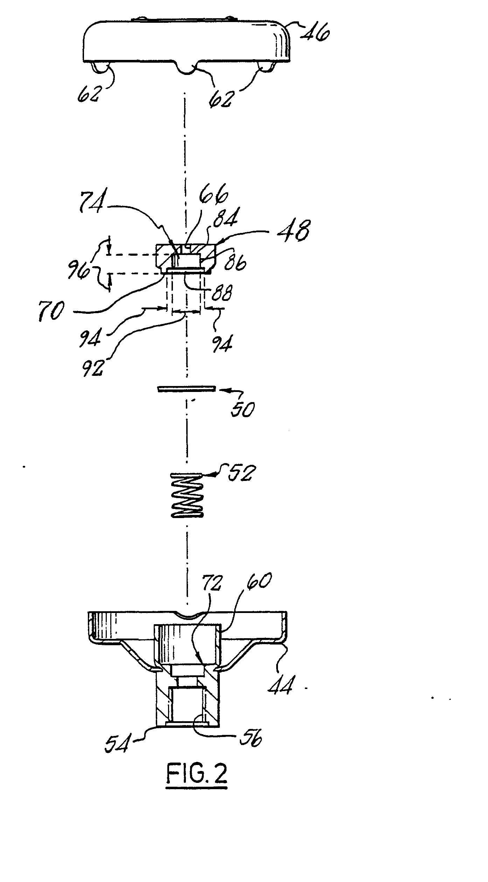

Turning now to the details of the structure of control valve assembly 16, reference is directed more particularly to Fig. 2 in which it can be seen that the valve assembly comprises interfitting inner and outer caps 44 and 46 respectively which form a housing for a valve seat member 48, a valve disc 50 to engage the valve seat, and a valve spring 52 to press the valve disc towards the valve seat.

Inner cap 44 has central opening in its inner end in which is secured a tubular union 54 having an internal screw thread 56 at its inner end in which is received a corresponding screw-threaded male union 58 provided at the outer end of air admission tube 12.

The outer end 60 of union 54 is in the form of a cylindrical sleeve forming a mounting for valve seat member 48 and a housing for valve disc 50 and valve spring 52.

Outer cap 46 is proportioned to fit over inner cap 44 to define a housing, and has deformable ears 62 which are bent over so as to secure the two caps together during assembly. A gap for the entry of air into the control valve assembly 16 in the direction indicated by the two arrows 64 is provided between the two caps 44, 46.

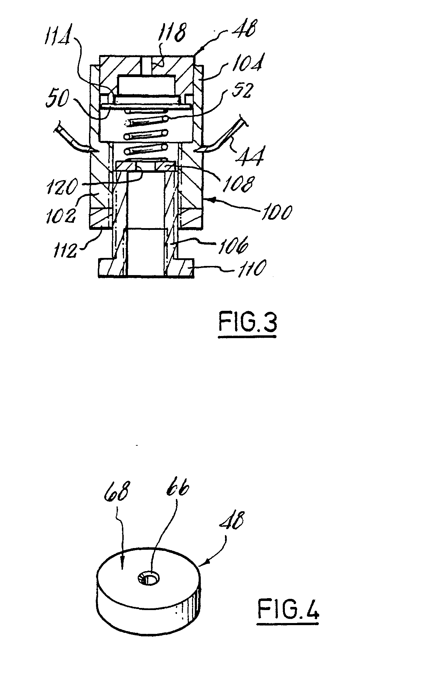

As shown in Figs. 2 and 4, valve seat member 48 is generally cup-shaped and is mounted with its open end facing the air admission tube 12 and is formed with an air inlet opening 66 in its closed end 68. The valve seat member provides an annular valve seat 70 at its open end. The valve seat is flat and annular in form and provided with a very finely machined and polished surface for good sealing engagement with valve disc 50.

Valve seat member 48 is, on assembly, press-fitted into sleeve 60 so as to be gripped and held thereby. Valve spring 52 is located at its inner end in a recess 72 formed in union 45, the spring pressing valve disc 50 against valve seat 70.

During assembly of exhaust aspirator 10, the control valve assembly 16 is set so as to open (ie valve disc 50 lifts from valve seat 70) upon application to air admission tube 12 of a pressure of from 10.0 millibars (10.2 cm or 4.0 inches of water) to 24.9 millibars (25.4 cm or 10.0 inches of water) below one atmosphere. The preferred range of pressures is from 11.3 to 21.1 millibars (11.5 cm to 21.5 cm of water) below one atmosphere. The setting which suits the majority of petrol engines for cars is 15.6 millibars (15.9 cm or 6.25 inches of water) below one atmosphere, and variations of 0.6 millibars (0.6 cm of water) on both sides of this figure.

These valve opening pressures are determined by means of a water manometer which is connected to tube 12 during assembly. The valve opening pressure is set by adjustment of the position of valve seat member 48 in sleeve 60 during the operation of pressing valve member 48 into sleeve 60 as a friction-fit therein. As the valve seat member is pressed into sleeve 60 the vacuum which the valve assembly can sustain increases. The correct position of the valve seat member is indicated when the valve assembly opens at the selected pressure in the ranges indicated above.

Valve disc 50 and valve seat member 48 define a chamber 74 on the atmospheric side of the valve disc (ie. the opposite side from the exhaust manifold) into which chamber air can be drawn through air inlet opening 66.

Turning now to the shape, proportions and size of chamber 74, valve seat member 48 itself is cylindrical and the chamber 74 formed within it is likewise cylindrical. Air inlet opening 66 is likewise cylindrical in form, and it has frustoconical portions at its opposite ends.

Chamber 74 has inner and outer portions 86 and 88 respectively, of differing diameters. The smaller diameter inner chamber portion 86 is of diameter 8 mm and the outer chamber portion 88 is of diameter 10 mm. Air inlet 66 is of diameter 2 mm.

It has been found that the dimensions, shapes and proportions of chamber 74 are critical to the performance of the exhaust aspirator at higher engine speeds. It has also been found that the diameter 92 of chamber portion 86 should be from 70% to 90% of the diameter 94 of the chamber portion 88.

In addition, the diameter of air inlet opening 66 has been found preferably to lie in the range of 10% to 30% of the diameter of portion 88 of chamber 74—the figure in this embodiment being 20%.

Also, the depth 96 of chamber 74 measured from valve seat 82 to the closed end 84 of the valve seat member should preferably lie in the range from 40% to 60% of the diameter of chamber portion 88—the depth in this embodiment being 5 mm which is 50% of the diameter of the wider chamber portion.

Valve disc 50 is formed of a metal of density lower than that of steel—preferably of a very low density alloy material. The disc is flat, formed with a very highly polished surface for engagement with valve seat 70, and lightly pressed against the seat by coiled compression spring 52.

In use, the passage of exhaust gases from a combustion chamber of an engine through an exhaust manifold to the exhaust outlet proceeds in a series of high pressure waves, each followed by a corresponding vacuum wave which reduces pressure within air admission tube 12 sufficiently to lift valve disc 50 from its valve seat and to admit air to tube 12 through the air inlet opening in the valve seat member 48. Successive engine cycles and the associated vacuum waves produce an inflow of air to the exhaust manifold thereby reducing the re-cycling of exhaust gases in the engine, damping the vacuum waves and promoting more effective exhaust gas discharge.

It has been found that the provision of chamber 74 within valve seat member 48 together with the very light weight valve disc 50 significantly increases the engine speeds at which the aspirator 10 is able to operate. With the valve seat member 48 engine speeds of up to seven thousand revolutions per minute can be accommodated with satisfactory opening of the valve.

The provision in chamber 74 of the step in diameter between chamber portions 88 and 86 provides frequency compatability between the two sides of valve disc 50. It is believed that resonance factors enter into the improvement in performance of the embodiments of the invention described above, as compared with previously proposed devices. These effects avoid the build up of static waves during use and thus avoid the effective blanking-off of the air admission valve at relatively low engine speeds. By designing chamber 74 so that its volume and dimensions, and indeed its shape, are conducive to resonant frequency compatabilty with the air admission tube 12 and the exhaust system of the engine, an improvement in the response of the valve assembly at higher engine speeds is achieved. The need for frequency compatability between the ducts and chambers on the opposite sides of a control valve of an exhaust aspirator is believed to be a design criterion which is entirely new in this art.

The resonant frequency of the chamber 74 need not be the same frequency as that of the air admission tube—it is sufficient for the former to be a harmonic of the latter.

The embodiment of Figure 3 is constructed in a similar manner to that of the embodiment of Figures 1, 2 and 4, and cap 44, valve seat member 48, valve disc 50, and valve spring 52 are constructed as described above and have the same reference numerals as in the previous embodiment.

A union 100 (corresponding to union 54) is formed with a lower internally screw-threaded portion 102 and an upper portion 104—the latter corresponding to portion 60 in the previous embodiment.

Union 100 is secured to cap 44 as in the previous embodiment, and valve seat member 48 is secured within portion 104 with valve spring 52 holding valve disc 50 against the valve seat generally as described above.

However, means is provided whereby the thrust exerted on valve disc 50 by spring 52 may be adjusted. For this purpose, a screw-threaded adjustment sleeve 106 is received in portion 102 of the union and supports an annular washer 108 which is a free sliding fit within portion 102 of the union and serves as a seat for the inner end of valve spring 52. Position-adjustment of member 106 by rotating it by means of a hexagon head 110 adjusts the vacuum at which valve disc 50 opens. A lock nut 112 enables a desired setting of member 106 to be maintained.

This embodiment of the invention enables determinations to be made of the optimum valve opening pressure for any particular engine. Adjustments of the valve spring pressure can be made in situ on the engine. The optimum setting is indicated by the maximum flow rate of air through the valve assembly of Fig. 3. This may be determined by means of a sensitive pressure monitoring device connected thereto—for example an altimeter.

Once the optimum valve opening pressure has been determined for a particular engine, this opening pressure can then be reproduced in the non-adjustable embodiments of the invention as described above, in which the valve opening pressure is pre-set during manufacture.

Fig. 3 also shows the diameter step 114 within valve member 48 between the two chamber portions (as in Fig. 2).

Further modifications of the performance of the valve assembly may be achieved by use of washers 108 having internal openings 120 of various diameters—whereby the resonant frequency of the chamber on the engine side of valve 50 may be changed.

## Claims

1. A device (10) for admitting air to the exhaust manifold of an internal combustion engine comprising:

an air admission tube (12);

a connector (14) at one end of the tube whereby the tube can be connected to an exhaust manifold; and

a control valve assembly (16) at the other end of the tube to control the passage of gas through the air admission tube;

the control valve assembly comprising a valve seat member (48) having a closed end (84) closing the path of air to the air admission tube (12) and formed with an air inlet opening (66) extending through said closed end to provide communication between the atmospheric side and the engine side thereof;

the valve seat member (48) being also formed on its engine side with an annular valve seating lip (70); and

a valve disc (50) for seating engagement with said valve seating lip to close the path of air from the air inlet opening (66) to the air admission tube, and defining with the valve seat member a chamber (74) on the atmospheric side of the valve disc (50) and communicating with the atmosphere through said air inlet opening (66); characterised in that

said chamber 74 comprises two cylindrical chamber portions (86, 88) of differing diameters (92, 94) including an outer portion (88) terminating at an open end defined by said lip (70) and an inner portion (86) terminating at the closed end (84) of said valve seat member, said inner portion (86) being of smaller diameter (92) than said outer portion (88) and a diameter step being provided in chamber (74) between said chamber portions through which air passing to the air admission tube must pass;

the width of said air inlet opening (66) formed in said closed end (84) of the valve seat member being less than the axial depth (96) of chamber (74);

said valve seat lip (70) having a polished surface for sealing engagement with the valve disc (50);

a valve spring (52) being provided which holds said valve disc (50) in engagement with the polished surface, the valve spring being set so that the valve opens upon application to the air admission tube of a pressure from 10.0 to 24.9 millibars below one atmosphere; and

said air admission tube (12) comprises copper tube including portions of differing internal diameters providing steps in diameter between said tube portions, the internal diameter of the portion at the engine end of the air admission tube being greater than that at the atmosphere end thereof.

2. A device according to claim 1 characterised in that the diameter of the inner chamber portion (86) is from seventy per cent to ninety per cent of the diameter of the outer chamber portion (88).

3. A device according to claim 1 or claim 2 characterised in that said air inlet opening (66) is of circular cross-sectional shape, the diameter of the air inlet opening lying in the range of from ten per cent to thirty per cent of the diameter of the outer chamber portion (88).

4. A device according to any one of the preceding claims characterised in that the depth of said chamber (74) measured from said valve seating lip (70) to the closed end (84) of the valve seat member (48) lies in the range of from forty per cent to sixty per cent of the diameter of the outer chamber portion (88).

5. A device according to any one of the preceding claims characterised in that said valve spring (52) is in the form of a coiled compression spring and said valve disc (50) is formed of a material of density lower than that of steel.

6. A device according to any one of the preceding claims characterised in that said valve spring (52) is set so that the valve opens upon application to the air admission tube (12) of a pressure from 11.3 to 21.1 millibars below one atmosphere.

7. A device according to any one of the preceding claims characterised in that said control valve assembly (16) is formed predominently of metal or metals having a density lower than that of steel.

**Patentansprüche**

1. Vorrichtung (10) zur Luftzufuhr in den Auspuffkrümmer einer Brennkraftmaschine, mit einem Zufuhrrohr (12),

mit einem Verbindungsstück (14) an einem Ende des Rohres, womit das Rohr an einen Auspuffkrümmer angeschlossen werden kann, und

mit einer Steuerventilanordnung (16) am anderen Ende des Rohres, um die Zurfuhr von Gas durch das Luftzufuhrrohr zu regeln,

wobei die Steuerventilanordnung ein Ventilsitzelement (48) mit einem geschlossenen Ende (84), das den Weg der Luft zu dem Luftzufuhrrohr (12) verschließt, und das mit einer Lufteinlaßöffnung (66) ausgebildet ist, die sich durch das geschlossene Ende hindurcherstreckt, um eine Verbindung zwischen der Atmosphärenseite und der Maschinenseite zu schaffen,

wobei das Ventilsitzelement (48) außerdem maschinenseitig mit einer ringförmigen Ventilsitzlippe (70) ausgebildet ist und

eine Ventilscheibe (50) aufweist für eine Sitzanlage an der Ventilsitzlippe, um den Weg der Luft von der Lufeinlaßöffnung (66) zu dem Luftzufuhrrohr zu schließen, und um mit dem Ventilsitzelement eine Kammer (74) auf der Atmosphärenseite der Ventilscheibe (50) zu begrenzen, die mit der Atmosphäre durch die Lufteinlaßöffnung (66) in Verbindung steht, dadurch gekennzeichnet,

dab die Kammer (74) zwei zylindrische Kammerabschnitte (86, 88) mit verschiedenen Durchmessern (92, 94) mit einem äußeren Abschnitt (88), der an einem offenen Ende endet, von der Lippe (70) begrenzt ist, und mit einem inneren Abschnitt (86), der an dem geschlossenen Ende (84) des Ventilsitzelementes endet, daß der innere Abschnitt (86) einen kleineren Durchmesser (92) aufweist als der äußere Abschnitt (88) und eine Stufe in der Kammer (74) zwischen den Kammerabschnitten vorgesehen ist, durch welche Luft, die zu dem Luftzufuhrrohr gelangt, strömen muß,

daß die lichte Weite der Luftzufuhröffnung (66), die an dem geschlossenen Ende (84) des Ventilsitzelementes ausgebildet ist, kleiner ist als die axiale Tiefe (96) der Kammer (74),

daß die Ventilsitzlippe (70) eine polierte Oberfläche für eine abdichtende Anlage mit der Ventilscheibe (50) aufweist,

daß eine Ventilfeder (52) vorgesehen ist, welche die Ventilscheibe (50) in Anlage mit der polierten Oberfläche hält, daß die Ventilfeder derart eingestellt ist, daß das Ventil nach Aufbringen eines Druckes von 10,0 bis 24,9 mbar unterhalb einer Atmosphäre an das Luftzufuhrrohr öffnet, und

daß das Luftzufuhrrohr (12) aus Kupferrohr aufweisenden Abschnitten mit verschiedenem inneren Durchmesser ausgebildet ist, welche Durchmesserstufen zwischen den Rohrabschnitten bilden, und daß der innere Durchmesser des maschinenseitigen Abschnitts des Luftzufuhrrohres größer ist als der an der Atmosphärenseite.

2. Vorrichtung nach Anspruch 1, dadurch gekennzeichnet, daß der Durchmesser des inneren Kammerabschnitts (86) 70% bis 90% des Durchmessers des äußeren Kammerabschnitts (88) beträgt.

3. Vorrichtung nach Anspruch 1 oder 2, dadurch gekennzeichnet, daß die Lufteinlaßöffnung (66) kreisförmigen Querschnitt aufweist, und daß der Durchmesser der Lufteinlaßöffnung im Bereich von 10% bis 30% des Durchmessers des äußeren Kammerabschnitts (88) liegt.

4. Vorrichtung nach einem der vorhergehenden Ansprüche, dadurch gekennzeichnet, daß die Tiefe der Kammer (74) gemessen von der Ventilsitzlippe (70) zu dem geschlossenen Ende (84) des Ventilsitzelementes (48) im Bereich von 40% bis 60% des Durchmessers des äußeren Kammerabschnitts (88) liegt.

5. Vorrichtung nach einem der vorhergehenden Ansprüche, dadurch gekennzeichnet, daß die Ventilfeder (52) in Form einer Schraubendruckfeder ausgebildet ist, und daß die Ventilscheibe (50) aus einem Material mit einer Dichte besteht, die geringer ist als die von Stahl.

6. Vorrichtung nach einem der vorhergehenden Ansprüche, dadurch gekennzeichnet, daß die Ventilfeder (52) so eingestellt ist, daß das Ventil nach Anlegen eines Druckes von 11,3 bis 21,1 mbar unterhalb einer Atmosphäre an das Luftzufuhrrohr öffnet.

7. Vorrichtung nach einem der vorhergehenden Ansprüche, dadurch gekennzeichnet, daß die Steuerventilanordnung (16) vorwiegend aus Metall oder Metallen mit einer Dichte besteht, die geringer ist als die von Stahl.

**Revendications**

1. Dispositif (10) d'admission d'air dans le collecteur d'échappement d'un moteur à combustion interne, comprenant:

un tube d'admission d'air (12);

un connecteur (14) prévu à une extrémité du tube, par lequel le tube peut être raccordé à un collecteur d'échappement; et ·

un clapet de commande (16) situé à l'autre extrémité du tube, pour commander le passage de gaz dans le tube d'admission d'air;

le clapet de commande comprenant un siège de clapet (48) ayant une extrémité fermée (84) qui obture le passage d'air vers le tube d'admission d'air (12) et qui présente un orifice d'entrée d'air (66) traversant ladite extrémité fermée de manière à ménager une communication entre le côté situé à l'atmosphère et le côté situé vers le moteur;

le siège de clapet (48) comportant également, sur le côté situé vers le moteur, une lèvre annulaire (70) d'appui de clapet; et

un disque de clapet (50) susceptible de venir en contact sur ladite lèvre d'appui de clapet de manière à fermer le passage d'air de l'orifice d'entrée d'air (66) vers le tube d'admission d'air, et qui définit avec le siège de clapet une chambre (74) située sur le côté à l'atmosphère du disque de clapet (50) et en communication avec l'atmosphère à travers ledit orifice d'entrée d'air (66); caractérisé en ce que

ladite chambre (74) comprend deux parties de chambre cylindriques (86, 88) de diamètres différents (92, 94), comportant une partie extérieure (88) qui se termine à une extrémité ouverte définie par ladite lèvre (70) et une partie intérieure (86) qui se termine à l'extrémité fermée (84) dudit siège de clapet, ladite partie intérieure (86) étant de plus petit diamètre (92) que ladite partie extérieure (88), et un épaulement circonférentiel étant prévu dans la chambre (74) entre lesdites parties de chambre et à travers lequel l'air doit passer dans son parcours vers le tube d'admission d'air;

la largeur dudit orifice d'entrée d'air (66) ménagé dans ladite extrémité fermée (84) du siège de clapet étant inférieure à la profondeur axiale (96) de la chambre (74);

ladite lèvre d'appui de clapet (70) présentant une surface polie pour venir en contact étanche avec le disque de clapet (50);

un ressort de clapet (52) étant prévu pour maintenir ledit disque de clapet (50) en contact avec la surface polie, le ressort de clapet étant réglé de sorte que le clapet s'ouvre lors de l'application au tube d'admission d'air d'une dépression de 10,0 à 24,9 millibars; et

ledit tube d'admission d'air (12) comprend un tube de cuivre comportant des parties de différents diamètres intérieures définissant des épaulements circonférentiels entre lesdites parties du tube, le diamètre intérieur de la partie situées à l'extrémité côté moteur du tube d'admission d'air étant supérieur au diamètre intérieur de la partie située à son extrémité côté atmosphère.

2. Dispositif suivant la revendication 1, caractérisé en ce que le diamètre de la partie de chambre intérieure (86) est de 70% à 90% du diamètre de la partie de la chambre extérieure (88).

3. Dispositif suivant la revendication 1 ou la revendication 2, caractérisé en ce que ledit orifice d'entrée d'air (66) est de section transversale circulaire, le diamètre de l'orifice d'entrée d'air étant compris entre 10% et 30% du diamètre de la partie de chambre extérieure (88).

4. Dispositif suivant l'une quelconque des revendications précédentes, caractérisé en ce que la profondeur de ladite chambre (74), mesurée de ladite lèvre d'appui de clapet (70) à l'extrémité fermée (84) du siège de clapet (48), est comprise entre 40% et 60% du diamètre de la partie de chambre extérieure (88).

5. Dispositif suivant l'une quelconque des revendications précédentes, caractérisé en ce que ledit ressort de clapet (52) présente la forme d'un ressort hélicoïdal de compression et ledit disque de clapet (50) est réalisé en une matière de densité inférieure à celle de l'acier.

6. Dispositif suivant l'une quelconque des revendications précédentes, caractérisé en ce que ledit ressort de clapet (52) est déterminé de sorte que le clapet s'ouvre lors de l'application au tube d'admission d'air (12) d'une dépression de 11,3 à 21,1 millibars.

7. Dispositif suivant l'une quelconque des revendications précédentes, caractérisé en ce que ledit clapet de commande (16) est réalisé principalement en un métal ou en métaux ayant une densité inférieure à celle de l'acier.

FIG.1

FIG. 2

FIG.3

FIG.4